# EUROPEAN PATENT APPLICATION

(11) **EP 2 482 158 A1**
(43) Date of publication of application: **01.08.2012**
(21) Application number: 10818798.0
(22) Date of filing: 22.09.2010
(51) Int. Cl.: G05B 23/02, E02F 9/24, G01M 17/007

(54) **ANOMALY-MONITORING DEVICE FOR MACHINERY**

(30) Priority: 25.09.2009 JP 2009220837
(71) Applicant: Hitachi Construction Machinery Co., Ltd., Bunkyo-ku, Tokyo 112-8563 (JP)
(72) Inventor: SHIBAMORI Kazuhiro, Tsuchiura-shi Ibaraki 300-0013 (JP); KOWATARI Yoichi, Tsuchiura-shi Ibaraki 300-0013 (JP); TSUKADA Hidenobu, Tsuchiura-shi Ibaraki 300-0013 (JP); KIMURA Akira, Tsuchiura-shi Ibaraki 300-0013 (JP); KOTSUJI Kyouhei, Tsuchiura-shi Ibaraki 300-0013 (JP)
(74) Representative: Beetz & Partner
(86) International application number: PCT/JP2010/066375
(87) International publication number: WO 2011/037125

(57) **Abstract**

A machine abnormality monitoring device comprises: a basic information generating unit (3) which generates basic information, including a priority level preset for each type of abnormality, when an abnormality judgment unit (2) judges that an abnormality has occurred; a snapshot data storage unit (6) in which snapshot data regarding the abnormality occurrence is stored while being associated with the basic information; and a storage control unit (7) which controls the storage of the snapshot data in the snapshot data storage unit. In cases where a new abnormality occurs when the snapshot data storage unit has no free storage area, if snapshot data at a priority level lower than that of the new abnormality exists in prior snapshot data stored in the snapshot data storage unit, the storage control unit stores the snapshot data regarding the new abnormality in the snapshot data storage unit in place of the prior snapshot data at the lower priority level while associating the new snapshot data with the basic information. The machine abnormality monitoring device allows the administrator to acquire the snapshot data regarding an abnormality in question with high reliability.

## Description

### Technical Field

The present invention relates to a machine abnormality monitoring device which stores snapshot data regarding operational status of a machine upon occurrence of an abnormality in the machine and transmits the stored snapshot data to a management terminal as the need arises.

### Background Art

Abnormality monitoring devices for machines (e.g., construction machines) include those detecting the occurrence of an abnormality in a machine based on operation information on the machine inputted from various sensors. The abnormality monitoring device which has detected the occurrence of an abnormality from the operation information successively transmits information indicating the occurrence of an abnormality, identification information (abnormality code) indicating the type of the abnormality, etc. to a management terminal. By receiving the abnormality codes transmitted from machines as above, an administrator (manager) at the management terminal is allowed to learn of the occurrence of abnormalities in multiple machines operating at different places and the types of the abnormalities. However, using the abnormality code alone is insufficient for making it clear in what kind of status and process the abnormality occurred. To resolve this problem, there exists an abnormality monitoring device configured to store snapshot data of a machine (operation information on the machine for a prescribed period with reference to the time of occurrence of the abnormality) and transmit the stored snapshot data to the management terminal in response to a request (download request) from the management terminal. By the transmission of the snapshot data from the abnormality monitoring device to the management terminal in response to the download request, the administrator (manager) at the management terminal is allowed to learn of the detailed status of the machine at the time of occurrence of the abnormality. The snapshot data, as a set of sensor information gathered from a plurality of sensors, tends to be far larger in size than the data (abnormality code, etc.) transmitted upon occurrence of the abnormality. However, the increase in the data traffic from the abnormality monitoring devices to the management terminal can be reduced by configuring the management terminal to receive the snapshot data from the abnormality monitoring devices only when necessary (as the need arises).

Incidentally, abnormality monitoring devices of this type include those installed mainly in a construction machine (hydraulic shovel, wheel loader, dump truck, etc.) and transmitting a status code, indicating general status of the machine (engine revolution speed, vehicle speed, etc.) at the time of occurrence of abnormality, to the management terminal together with the abnormality code upon detection of the abnormality (see JP, A 11-65645, for example). By referring to the status code at the management terminal, the administrator (informed of the general status of the machine at the time of occurrence of the abnormality) can make the judgment on whether to issue the download request to the abnormality monitoring device or not more precisely compared to the cases where only the abnormality code is used for the judgment. Further, the number of download requests requesting unnecessary snapshot data is reduced by the precise judgment, by which the total amount of snapshot data transmitted to and stored in the management terminal can be reduced.

### Prior Art Document

### Patent Document

Patent Document 1: JP, A 11-65645

### Summary of the Invention

### Problem to be Solved by the Invention

In the abnormality monitoring devices in the above technology, however, the amount of snapshot data that can be stored in the device has a certain limit, and the date/time of each abnormality detection is successively (from the oldest one) overwritten with new one after the amount of the stored snapshot data reaches the limit. Thus, occurrence of a new abnormality can cause deletion of snapshot data (regarding a prior abnormality) that has not been downloaded to the management terminal yet, which can make it impossible to acquire necessary snapshot data regarding an abnormality in question. Further, in cases where the same abnormality is occurring frequently in a machine, snapshot data regarding a newly occurring different abnormality can soon be overwritten with subsequent snapshot data regarding the frequently occurring abnormality, which can make it impossible to acquire important snapshot data regarding the different abnormality.

It is therefore an object of the present invention to provide a machine abnormality monitoring device capable of reliably preserving the snapshot data regarding an abnormality of high importance (snapshot data likely to be requested).

### Means for Solving the Problem

In accordance with an aspect of the present invention, there is provided a machine abnormality monitoring device comprising operation information detecting means which detects operation information regarding operating status of a machine and an abnormality judgment unit which makes judgment on occurrence of an abnormality in the machine based on the operation information inputted from the operation information detecting means, storing the operation information for a prescribed period with reference to the time of occurrence of the abnormality as snapshot data, and outputting the stored snapshot data in response to a request from a management terminal. The machine abnormality monitoring device comprises: a basic information generating unit which generates basic information, including a priority level preset for the type of the abnormality, when the abnormality judgment unit judges that the abnormality has occurred; a snapshot data storage unit in which the snapshot data regarding the abnormality occurrence is stored while being associated with the basic information generated by the basic information generating unit upon occurrence of the abnormality; and a storage control unit which controls the storage of the snapshot data in the snapshot data storage unit. In cases where a new abnormality occurs when the snapshot data storage unit has no free storage area, if snapshot data at a priority level lower than that of the new abnormality exists in prior snapshot data stored in the snapshot data storage unit, the storage control unit stores the snapshot data regarding the new abnormality in the snapshot data storage unit in place of the prior snapshot data at the lower priority level while associating the new snapshot data with the basic information regarding the new abnormality.

### Effect of the Invention

By the present invention, it is made possible to acquire the snapshot data regarding an abnormality in question with high reliability.

### Brief Description of the Drawings

Fig. 1 is a block diagram of a machine abnormality monitoring device in accordance with an embodiment of the present invention.
Fig. 2 is a table showing an example of basic information regarding snapshot data stored in a snapshot data storage unit in the embodiment of the present invention.
Fig. 3 is a flow chart showing the flow of snapshot data storing which is executed in the abnormality monitoring device in accordance with the embodiment of the present invention.
Fig. 4 is a flow chart showing the flow of a storage control process executed by a storage control unit according to the embodiment of the present invention.

### Embodiment of the Invention

Referring now to the drawings, a description will be given in detail of a preferred embodiment in accordance with the present invention.

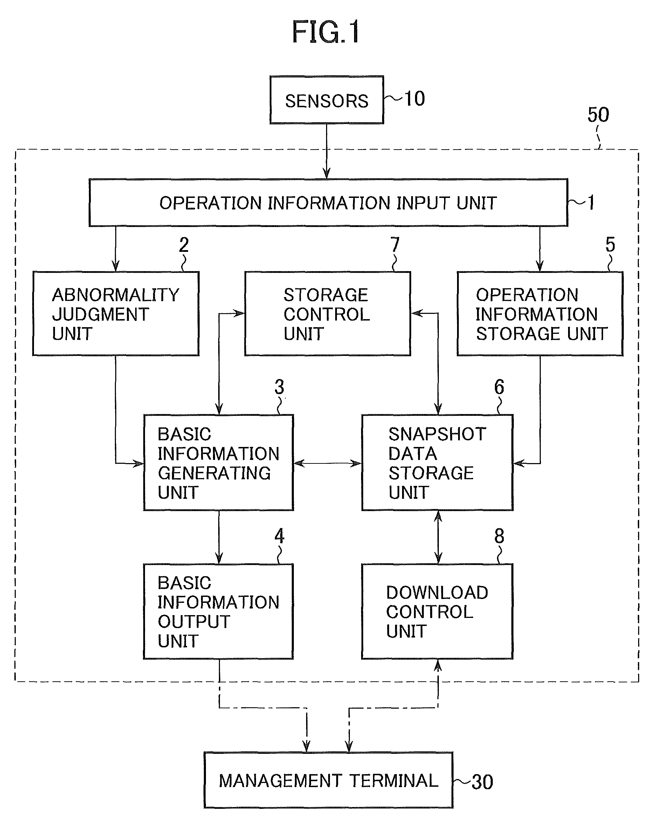

Fig. 1 is a block diagram of a machine abnormality monitoring device in accordance with an embodiment of the present invention. The abnormality monitoring device 50 shown in Fig. 1 is installed in a construction machine (hydraulic shovel, wheel loader, dump truck, bulldozer, etc.). The abnormality monitoring device 50 comprises an operation information input unit 1, an abnormality judgment unit 2, a basic information generating unit 3, a basic information output unit 4, an operation information storage unit 5, a snapshot data storage unit 6, a storage control unit 7 and a download control unit 8.

The operation information input unit 1, which is connected to various sensors (operation information detecting means) 10 installed in the construction machine, is a part of the abnormality monitoring device 50 through which operation information regarding operating status of the construction machine is inputted from the sensors 10. The sensors 10 can include, for example, an overheating signal sensor, an engine oil pressure sensor, an actual engine revolution speed sensor, a main hydraulic pump pressure sensor, an air filter differential pressure sensor, etc.

The overheating signal sensor, as a sensor for detecting an overheating signal transmitted when the engine coolant temperature reaches a preset level, is used for detecting the overheating of the engine of the construction machine. The overheating may also be detected by use of an engine coolant temperature sensor. The engine oil pressure sensor, as a sensor for detecting the engine oil pressure, is used for detecting abnormality in the engine oil circulation system. For example, the engine oil pressure falling below a preset level may be regarded as indicative of an abnormality (e.g., oil leak) occurring in the engine oil circulation system. The actual engine revolution speed sensor, as a sensor for detecting the actual revolution speed of the engine, is used for detecting abnormality in the engine. The main hydraulic pump pressure sensor, as a sensor for detecting the discharge pressure of a main hydraulic pump for supplying pressurized oil to actuators (hydraulic cylinder, hydraulic motor, etc.) of the construction machine, is used for detecting abnormality in the main hydraulic pump. For example, when the minimum value of the main hydraulic pump discharge pressure is detected to fall to a preset level (e.g., 0 kPa), this may be regarded as indicative of an abnormality occurring in the main hydraulic pump. The air filter differential pressure sensor, as a sensor for detecting the differential pressure between the parts before and after the air filter installed in the engine room, is used for warning the construction machine's operator of the clogging of the air filter.

The abnormality judgment unit 2, which is connected with the operation information input unit 1 and the basic information generating unit 3, is a component for making judgment on the occurrence of an abnormality in the construction machine based on the operation information inputted from the sensors 10. For example, when the overheating signal is detected by the overheating signal sensor (case 1), the abnormality judgment unit 2 judges that the "overheating" has occurred. When the engine oil pressure falling below the preset level is detected by the engine oil pressure sensor (case 2), the abnormality judgment unit 2 judges that an "engine oil pressure drop" has occurred. When the minimum value of the pump discharge pressure falling to the preset level is detected by the main hydraulic pump pressure sensor (case 3), the abnormality judgment unit 2 judges that a "main hydraulic pump discharge pressure drop" has occurred. When the filter differential pressure reaching a preset level is detected by the air filter differential pressure sensor (case 4), the abnormality judgment unit 2 judges that the "filter clogging" has occurred. When an abnormality is judged to have occurred, the abnormality judgment unit 2 outputs "abnormality occurrence information", indicating what kind of abnormality has occurred, to the basic information generating unit 3. The following explanation will be given taking the above four types of abnormalities as examples.

The basic information generating unit 3, which is connected with the abnormality judgment unit 2, the basic information output unit 4, the snapshot data storage unit 6 and the storage control unit 7, is a component for generating basic information on the abnormality occurrence when the abnormality occurrence information is inputted from the abnormality judgment unit 2. The basic information generating unit 3 in this embodiment generates three pieces of information: an abnormality code, a priority level and occurrence time information (information on the time of occurrence of the abnormality) as the basic information. The basic information generated by the basic information generating unit 3 is outputted to the basic information output unit 4 and the storage control unit 7 (and also to the snapshot data storage unit 6 when permitted by the storage control unit 7).

The "abnormality code" in the above basic information is an identifier previously set for each type of abnormality. The basic information generating unit 3 generates the abnormality code corresponding to the type of the abnormality which has occurred. For the aforementioned four types of abnormalities, for example, an abnormality code "100" has been assigned to the overheating (case 1), an abnormality code "200" has been assigned to the engine oil pressure drop (case 2), an abnormality code "300" has been assigned to the main hydraulic pump discharge pressure drop (case 3), and an abnormality code "400" has been assigned to the filter clogging (case 4).

The "priority level" in the above basic information represents the level of priority of the storing of the snapshot data regarding the abnormality occurrence in the snapshot data storage unit 6. The priority level, differing among the abnormality types, has been set for each abnormality type. In this embodiment, the priority level has been set depending on the degree of urgency for handling the abnormality occurrence (higher priority level for an abnormality of greater urgency). Specifically, the priority level is selected from 10 levels in this embodiment. An abnormality with the highest degree of ill effect (on the operation and behavior of the machine) and urgency for handling is assigned the highest priority level "10", while an abnormality with the lowest degree of ill effect and urgency is assigned the lowest priority level "1". For the aforementioned four types of abnormalities, for example, the overheating (case 1) has been assigned the priority level "10", the engine oil pressure drop (case 2) has been assigned a priority level "9", the main hydraulic pump discharge pressure drop (case 3) has been assigned a priority level "7", and the filter clogging (case 4) has been assigned a priority level "5". Incidentally, from the viewpoint of improving the flexibility of the operation, the priority level for each abnormality (generated by the basic information generating unit 3) is desired to be changeable via an external input device (e.g., control panel) or a management terminal 30 even after the assembly of the abnormality monitoring device 50. In this case, direct input of the instruction (for changing the priority level) to the basic information generating unit 3 may of course be allowed in addition to the indirect input to the basic information generating unit 3 via the external input device, etc.

The "occurrence time information (information on the time of occurrence of the abnormality)" in the above basic information is information on the time (date and time of day) when the abnormality occurred. In this embodiment, the date and time of the judgment by the abnormality judgment unit 2 that the abnormality occurred (the year, month, day and time of the judgment) are used as the occurrence time information.

The basic information output unit 4, which is connected to the management terminal 30 via a wireless network, successively outputs the basic information (inputted from the basic information generating unit 3) to the management terminal 30. The management terminal 30, which is installed in a monitoring base station at a place remote from a plurality of construction machines (each equipped with the abnormality monitoring device 50), is used for monitoring the operating status of the construction machines. By receiving the basic information from the abnormality monitoring devices 50 via the management terminal 30, the administrator (manager) in the monitoring base station is allowed to learn of an abnormality occurring in a construction machine as a target of the management.

The operation information storage unit 5, which is connected with the operation information input unit 1 and the snapshot data storage unit 6, is a component for storing the operation information inputted from various sensors (operation information detecting means) 10 via the operation information input unit 1. If operation information for a long period is stored, the amount of data (operation information) stored in the operation information storage unit 5 increases too much and the need of securing a sufficient free space in the operation information storage unit 5 arises. Thus, from the viewpoint of saving the storage capacity, it is desirable that operation information only for a prescribed period till the present time be stored in the operation information storage unit 5. In consideration of the length of the period for which the snapshot data is extracted from the operation information, the period for storing the operation information is desired to be set longer than the period for extracting the snapshot data. For example, in cases where operation information for a four-minute period between time points two minutes before and after the occurrence of the abnormality (reference time) is extracted as the snapshot data, it is desirable that operation information for at least a four-minute period till the present time be stored in the operation information storage unit 5. Part of the operation information stored in the operation information storage unit 5 is properly extracted and stored in the snapshot data storage unit 6 as the snapshot data.

The snapshot data storage unit 6 is connected with the basic information generating unit 3, the storage control unit 7, the operation information storage unit 5 and the download control unit 8. The snapshot data storage unit 6 is a component for storing the snapshot data regarding each abnormality which has occurred while associating the snapshot data with the basic information generated by the basic information generating unit 3 upon occurrence of the abnormality. The snapshot data stored in the snapshot data storage unit 6 is data that has been properly extracted from the operation information storage unit 5 according to an instruction from the storage control unit 7. The stored snapshot data is outputted to the management terminal 30 in response to the download request inputted via the download control unit 8. In the snapshot data storage unit 6 in this embodiment, "download history information" is also stored as the basic information (in addition to the basic information generated by the basic information generating unit 3 (abnormality code, priority level, occurrence time information)) while being associated with the snapshot data. The download history information, as information indicating whether the particular snapshot data has already been transmitted to the management terminal 30 or not, is generated by the download control unit 8. Specifically, when a piece of snapshot data requested by the download request is transmitted to and downloaded by the management terminal 30 normally, the download control unit 8 stores the download history information while associating it with the transmitted snapshot data.

Incidentally, there is a limit to the number of pieces of snapshot data that can be stored in the snapshot data storage unit 6 due to its limited storage capacity (memory capacity). Therefore, the storage of the snapshot data in the snapshot data storage unit 6 is controlled by the storage control unit 7 in this embodiment. The following explanation of this embodiment will be given assuming that the maximum number of pieces of snapshot data that can be stored in the snapshot data storage unit 6 is three.

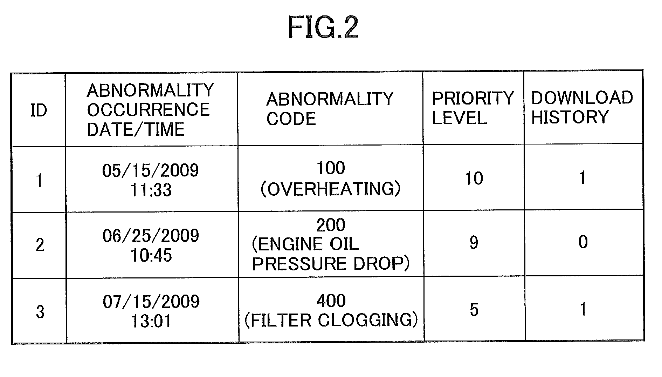

Fig. 2 is a table showing an example of the basic information regarding the snapshot data stored in the snapshot data storage unit 6 in the embodiment of the present invention. As shown in Fig. 2, the snapshot data storage unit 6 in this embodiment is capable of storing three pieces of snapshot data while associating each piece of snapshot data with the basic information (abnormality code, priority level, occurrence time information, download history information). In the example of Fig. 2, basic information regarding the overheating, the engine oil pressure drop and the filter clogging has been stored in the snapshot data storage unit 6. The "ID" in the table represents an ID (identification number) of each storage area of the snapshot data storage unit 6, and "DL HISTORY" represents whether each piece of snapshot data has already been downloaded or not (0: not downloaded yet, 1: already downloaded).

Returning to Fig. 1, the storage control unit 7, which is connected with the basic information generating unit 3 and the snapshot data storage unit 6, is a component for controlling the storage of the snapshot data in the snapshot data storage unit 6. While details will be explained later, the storage control unit 7 in this embodiment judges whether snapshot data regarding a new abnormality should be stored in the snapshot data storage unit 6 or not by comparing the basic information regarding the new abnormality generated by the basic information generating unit 3 with the basic information regarding prior abnormalities stored in the snapshot data storage unit 6.

The download control unit 8, which is connected to the snapshot data storage unit 6 and also connected to the management terminal 30 via the wireless network, is a component for extracting the requested snapshot data from the snapshot data storage unit 6 according to the download request from the management terminal 30 and transmitting the snapshot data to the management terminal 30. When the administrator (informed of the occurrence of an abnormality by the basic information sent from the basic information output unit 4) wants to further learn about detailed status of the abnormality, the administrator requests the snapshot data (operation information on the machine for the prescribed period with reference to the time of occurrence of the abnormality) by issuing the download request from the management terminal 30 to the download control unit 8 of the abnormality monitoring device 50. As mentioned above, when the snapshot data requested by the download request is transmitted from the abnormality monitoring device 50 and downloaded by the management terminal 30 normally, the download control unit 8 stores the download history information while associating it with the transmitted snapshot data.

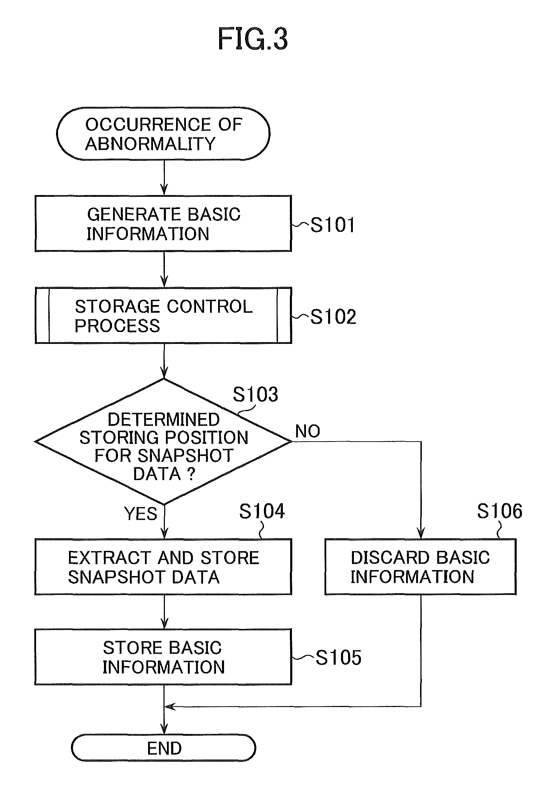

Fig. 3 is a flow chart showing the flow of snapshot data storing which is executed in the abnormality monitoring device 50 configured as above. The abnormality monitoring device 50 starts the process of Fig. 2 when the abnormality judgment unit 2 judges that an abnormality has occurred. At the start of the process, the basic information generating unit 3 generates the abnormality code and the priority level corresponding to the type of the abnormality and the occurrence time information (S101). For example, when the abnormality occurrence information indicating the occurrence of the pump discharge pressure drop is received from the abnormality judgment unit 2, the basic information generating unit 3 generates basic information that includes the abnormality code "300", the priority level "7" and the occurrence time information representing the date and time of the judgment by the abnormality judgment unit 2 on the occurrence of the abnormality. After the basic information is generated as above, a storage control process for determining whether the snapshot data regarding the abnormality occurrence should be stored in the snapshot data storage unit 6 or not and to which storage area of the snapshot data storage unit 6 the snapshot data should be stored (when it should be stored) is started by the storage control unit 7 (S102). The storage control process will be explained in detail below referring to Fig. 3.

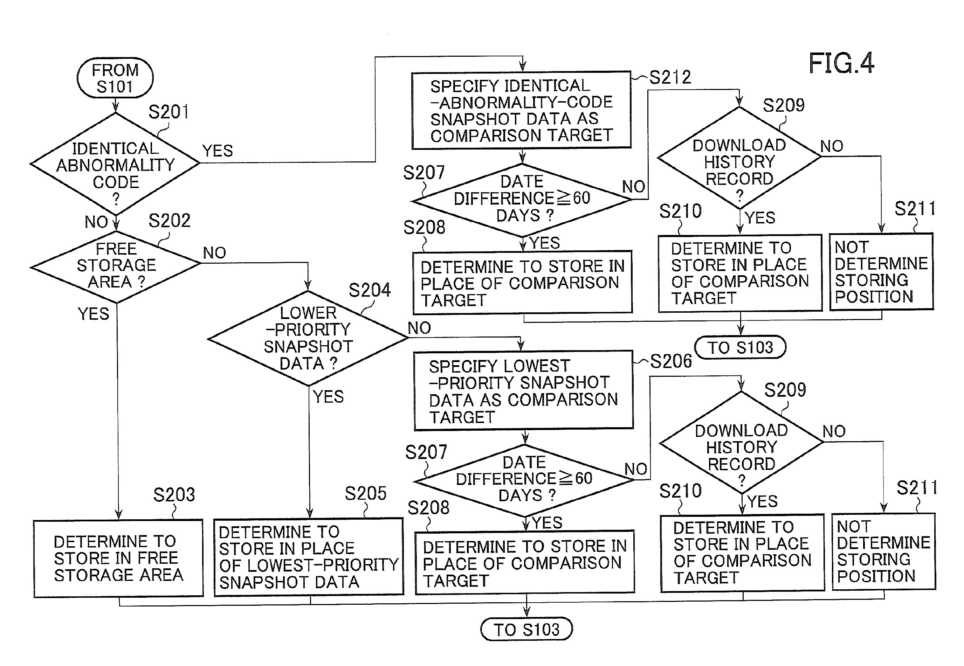

Fig. 4 is a flow chart showing the flow of the storage control process executed by the storage control unit 7 according to the embodiment of the present invention. In this process, the storage control unit 7 determines whether the snapshot data regarding the new abnormality should be stored in the snapshot data storage unit 6 or not and its storage area for storing the snapshot data (when it should be stored) by comparing the basic information regarding the new abnormality generated in S101 with the basic information regarding each piece of snapshot data (prior snapshot data) stored in the snapshot data storage unit 6.

At the start of the flow of Fig. 4, the storage control unit 7 judges whether snapshot data (or basic information) having an abnormality code identical with the abnormality code regarding the new abnormality exists in the snapshot data storage unit 6 or not (S201). If no such snapshot data having an identical abnormality code exists, the storage control unit 7 judges whether the snapshot data storage unit 6 has a free storage area or not (S202).

If the snapshot data storage unit 6 has a free storage area in S202, the storage control unit 7 determines to store the snapshot data regarding the new abnormality in the free storage area together with the corresponding basic information (S203) and thereafter advances to step S103 in Fig. 3 which will be explained later. If there is no free storage area in the snapshot data storage unit 6, the storage control unit 7 judges whether there exists in the snapshot data storage unit 6 prior snapshot data whose priority level is lower than that of the new abnormality (S204).

If prior snapshot data at a lower priority level (lower than that of the new abnormality) exists in the snapshot data storage unit 6, the storage control unit 7 determines to store the snapshot data regarding the new abnormality in the storage area already storing the lower-priority snapshot data together with the corresponding basic information (S205) and thereafter advances to the step S103. Incidentally, when there are two or more pieces of lower-priority snapshot data, it is desirable that snapshot data at the lowest priority level be selected. When there are two or more pieces of lowest-priority snapshot data, snapshot data whose ID is the smallest is selected. For example, if a "pump discharge pressure drop" (priority level: 7) occurs as the new abnormality when the three pieces of snapshot data having the basic information shown in Fig. 2 have already been stored in the snapshot data storage unit 6, the storage control unit 7 determines to store the snapshot data regarding the "pump discharge pressure drop" in the storage area having the ID "3" already storing the snapshot data regarding the "filter clogging" at the priority level "5" (lower than that of "pump discharge pressure drop") together with the corresponding basic information. By this, snapshot data at a higher priority level is stored in the snapshot data storage unit 6 in place of the snapshot data at a lower priority level, by which the probability of deletion of high priority snapshot data (regarding an abnormality at a high priority level) before being downloaded can be reduced.

If no snapshot data at a lower priority level is included in the prior snapshot data, that is, if the priority levels of the prior snapshot data are all higher than or equal to the priority level of the new abnormality in S204, the storage control unit 7 specifies snapshot data (or basic information) whose priority level is the lowest in the snapshot data storage unit 6 as the target of comparison (S206). Incidentally, when there are two or more pieces of lowest-priority snapshot data, a piece of snapshot data whose ID is the smallest is selected from the lowest-priority snapshot data as the target of comparison. In the next step S207, the storage control unit 7 judges whether or not the difference between the occurrence time information regarding the new abnormality and that regarding the target of comparison (i.e., elapsed time from the occurrence of the prior abnormality to the occurrence of the new abnormality) is a preset value (threshold value) or more (S207). This threshold value is desired to be set considering whether or not it can empirically be said that snapshot data regarding an abnormality may well be regarded as unnecessary when a time corresponding to the threshold value has passed since the occurrence of the abnormality. For example, the storage control unit 7 in this embodiment focuses on the date of occurrence of each abnormality as the occurrence time information in the step S207 and judges whether or not the difference between the date regarding the new abnormality and that regarding the target of comparison is 60 days or more. In this example, snapshot data regarding an abnormality for which two months or more has passed since the occurrence (i.e., abnormality that occurred two months ago or earlier) is regarded as unnecessary considering the fact that such snapshot data is substantially unnecessary in many cases (e.g., a case where similar snapshot data has already been downloaded from a different abnormality monitoring device) even if the snapshot data has not been downloaded. Incidentally, from the viewpoint of improving the flexibility of the operation, the preset value (threshold value) used by the storage control unit 7 for the comparison of the occurrence time information is desired to be changeable via an external input device (e.g., control panel) or the management terminal 30 even after the assembly of the abnormality monitoring device 50.

If the difference between the two pieces of occurrence time information is the preset value or more in S207, the storage control unit 7 determines to store the snapshot data regarding the new abnormality in the storage area already storing the prior snapshot data (as the target of comparison) together with the corresponding basic information (S208) and thereafter advances to the step S103. For example, if a new abnormality at a priority level "5" occurs when the three pieces of snapshot data having the basic information shown in Fig. 2 have already been stored in the snapshot data storage unit 6, the storage control unit 7 judges whether or not the difference between the date of the occurrence of the new abnormality and that (07/15/2009) of the "filter clogging" at the lowest priority level "5" in Fig. 2 is 60 days or more. If the "filter clogging" occurred 60 days ago or earlier, the storage control unit 7 determines to store the snapshot data regarding the new abnormality in the storage area having the ID "3" (already storing the snapshot data regarding the "filter clogging") together with the corresponding basic information. By this, even when a new abnormality at a low priority level occurs, the snapshot data regarding the new abnormality can preferentially be stored when there exists prior snapshot data that can be regarded as unnecessary due to the passage of the preset time period since the occurrence of the abnormality. In short, snapshot data regarding a recently-abnormality occurrence can be stored in the snapshot data storage unit 6 with priority over unnecessary snapshot data.

If the difference between the two pieces of occurrence time information is less than the preset value in S204, the storage control unit 7 judges whether or not the snapshot data as the target of comparison has the download history record (download history information "1") or not (S209). If the snapshot data as the target of comparison has the download history record, the storage control unit 7 determines to store the snapshot data regarding the new abnormality in the storage area already storing the snapshot data as the target of comparison together with the corresponding basic information (S210) and thereafter advances to the step S103. By this, even when a new abnormality at a low priority level occurs, the snapshot data regarding the new abnormality can preferentially be stored when there exists prior snapshot data that has already been downloaded by the management terminal 30. If the snapshot data as the target of comparison does not have the download history record in S209 (S209: N), the storage control unit 7 cancels the storing of the snapshot data regarding the new abnormality (S211) and thereafter advances to the step S103.

Incidentally, if snapshot data (or basic information) having an abnormality code identical with the abnormality code regarding the new abnormality exists in the snapshot data storage unit 6 in S201, the storage control unit 7 specifies the snapshot data (or basic information) having the identical abnormality code as the target of comparison (S212). When there are two or more pieces of such snapshot data having the identical abnormality code, one having the smallest ID is selected and specified as the target of comparison. The storage control unit 7 executes the subsequent process similarly to the aforementioned steps S207 - S211 as shown in Fig. 4 and thereafter advances to the step S103. By this, even when a new abnormality having the identical abnormality code occurs, newest snapshot data regarding the new abnormality can be stored in the snapshot data storage unit 6 with priority over prior unnecessary snapshot data.

After finishing the storage control process (S102) as above, the storage control unit 7 judges whether the storing position (storage area) for the snapshot data regarding the new abnormality has already been determined in the snapshot data storage unit 6 or not (S103). If the storing position for the snapshot data has already been determined, that is, if the step S203, S205, S208 or S210 has been executed, the storage control unit 7 extracts the operation information for the prescribed period with reference to the time of occurrence of the new abnormality from the operation information storage unit 5 and stores the extracted operation information in the snapshot data storage unit 6 as the snapshot data (S104). The storage control unit 7 further stores the basic information generated by the basic information generating unit 3 in the snapshot data storage unit 6 while associating the basic information with the snapshot data (S105) and thereafter ends the process. If the storing position for the snapshot data has not been determined in S103, that is, if the step S211 has been executed, the storage control unit 7 discards the basic information regarding the new abnormality (S106), cancels the storing of the snapshot data regarding the new abnormality, and ends the process.

As is clear from the above description, in cases where a new abnormality occurs when the snapshot data storage unit 6 has no free storage area, if snapshot data at a priority level lower than that of the new abnormality exists in prior snapshot data stored in the snapshot data storage unit 6, the abnormality monitoring device 50 in accordance with this embodiment stores the snapshot data regarding the new abnormality in the snapshot data storage unit 6 in place of the prior snapshot data at the lower priority level while associating the new snapshot data with the basic information regarding the new abnormality.

By this embodiment configured as above, snapshot data regarding an abnormality at a high priority level can preferentially be stored and preserved in the abnormality monitoring device (snapshot data storage unit). Therefore, by assigning a high priority level to a type of abnormality for which snapshot data is desired to be acquirable, the snapshot data regarding such an abnormality can be acquired with high reliability. For example, by assigning a high priority level to a type of abnormality with a high degree of urgency for handling as in this embodiment, the snapshot data regarding such an urgent abnormality can be acquired with high reliability. When there is a particular type of abnormality for which snapshot data should be acquired with highest priority, the snapshot data regarding such an abnormality can be acquired without fail by setting the priority level of the abnormality higher than those of other abnormalities. By configuring the abnormality monitoring device so that the priority level generated by the basic information generating unit 3 can be changed via an external input device, etc. as mentioned above, the administrator (manager) is allowed to take necessary steps with ease even when the need of acquiring snapshot data regarding a particular abnormality temporarily increases over those of other abnormalities, for example.

In the case where the storing position for the snapshot data regarding the new abnormality can not be determined by the comparison of the priority level, the comparison using the occurrence time information is executed first and then the comparison using the download history information is executed (when the determination is still impossible) in the above explanation. However, it is also possible to reverse the order and conduct the comparison using the download history information prior to the comparison using the occurrence time information. While the maximum number of pieces of snapshot data that can be stored in the snapshot data storage unit 6 is three in the above explanation, the present invention is of course applicable also to cases where the maximum number is less than three or more than three.

### Description of Reference Characters

- 1: operation information input unit
- 2: abnormality judgment unit
- 3: basic information generating unit
- 4: basic information output unit
- 5: operation information storage unit
- 6: snapshot data storage unit
- 7: storage control unit
- 8: download control unit
- 10: sensors
- 30: management terminal
- 50: abnormality monitoring device

## Claims

1. A machine abnormality monitoring device comprising operation information detecting means which detects operation information regarding operating status of a machine and an abnormality judgment unit which makes judgment on occurrence of an abnormality in the machine based on the operation information inputted from the operation information detecting means, storing the operation information for a prescribed period with reference to the time of occurrence of the abnormality as snapshot data, and outputting the stored snapshot data in response to a request from a management terminal, wherein the machine abnormality monitoring device comprises:
a basic information generating unit which generates basic information, including a priority level preset for the type of the abnormality, when the abnormality judgment unit judges that the abnormality has occurred;
a snapshot data storage unit in which the snapshot data regarding the abnormality occurrence is stored while being associated with the basic information generated by the basic information generating unit upon occurrence of the abnormality; and
a storage control unit which controls the storage of the snapshot data in the snapshot data storage unit,
wherein in cases where a new abnormality occurs when the snapshot data storage unit has no free storage area, if snapshot data at a priority level lower than that of the new abnormality exists in prior snapshot data stored in the snapshot data storage unit, the storage control unit stores the snapshot data regarding the new abnormality in the snapshot data storage unit in place of the prior snapshot data at the lower priority level while associating the new snapshot data with the basic information regarding the new abnormality.

2. The machine abnormality monitoring device according to claim 1, wherein:
the basic information generating unit further generates occurrence time information on the abnormality as the basic information when the abnormality judgment unit judges that the abnormality has occurred, and
in cases where a new abnormality occurs when the snapshot data storage unit has no free storage area and where snapshot data at a priority level lower than that of the new abnormality does not exist in the prior snapshot data stored in the snapshot data storage unit, if difference between the occurrence time information regarding the new abnormality and the occurrence time information regarding snapshot data at the lowest priority level in the prior snapshot data is a preset value or more, the storage control unit stores the snapshot data regarding the new abnormality in the snapshot data storage unit in place of the prior snapshot data at the lowest priority level while associating the new snapshot data with the basic information regarding the new abnormality.

3. The machine abnormality monitoring device according to claim 1 or 2, wherein:
the snapshot data is stored in the snapshot data storage unit while being associated with download history information indicating whether the snapshot data has already been transmitted to the management terminal or not, and
in cases where a new abnormality occurs when the snapshot data storage unit has no free storage area and where snapshot data at a priority level lower than that of the new abnormality does not exist in the prior snapshot data stored in the snapshot data storage unit, if snapshot data at the lowest priority level in the prior snapshot data has already been downloaded, the storage control unit stores the snapshot data regarding the new abnormality in the snapshot data storage unit in place of the prior snapshot data which has already been downloaded while associating the new snapshot data with the basic information regarding the new abnormality.

4. The machine abnormality monitoring device according to any one of claims 1 - 3, wherein the priority level generated by the basic information generating unit is changeable.

5. The machine abnormality monitoring device according to claim 2, wherein the preset value used for the comparison of the occurrence time information by the storage control unit is changeable.

6. The machine abnormality monitoring device according to any one of claims 1 - 5, wherein the storage control unit is capable of storing two or more pieces of snapshot data.
